# EUROPÄISCHE PATENTSCHRIFT

(11) **EP 0 690 228 B1**
(45) Veröffentlichungstag und Bekanntmachung des Hinweises auf die Patenterteilung: **22.11.2000**
(21) Anmeldenummer: 95109984.5
(22) Anmeldetag: 27.06.1995
(51) Int. Cl.: F03D 1/06

(54) **Montage- und Biegeträger eines Flügels**
Mounting and bending carrying cuff for aerodynamic blade
Manchette de montage et poutre de flexion pour pale aérodynamique

(30) Priorität: 01.07.1994 DE 4423115
(43) Veröffentlichungstag der Anmeldung: 03.01.1996
(73) Patentinhaber: WOLF HIRTH GmbH, 73230 Kirchheim/Teck (DE)
(72) Erfinder: Prasser, Josef, D 73252 Lenningen (DE)
(74) Vertreter: Vetter, Hans, Dipl.-Phys. Dr.

(56) Entgegenhaltungen:
- EP-A- 0 258 926
- FR-A- 1 216 378
- FR-A- 2 518 979
- US-A- 4 339 230
- US-A- 4 728 263
- PATENT ABSTRACTS OF JAPAN vol. 018 no. 037 (M-1545) ,20.Januar 1994 & JP-A-05 269868 (SUMITOMO METAL IND LTD) 19.Oktober 1993,
- PATENT ABSTRACTS OF JAPAN vol. 011 no. 016 (M-554) ,16.Januar 1987 & JP-A-61 192864 (YAMAHA MOTOR CO LTD) 27.August 1986,

## Beschreibung

Die Erfindung betrifft einen Propellerflügel aus Kunststoffmaterial, mit einem sich vom drehachsnahen Endbereich aus bis in den Propellerflügel hinein erstreckenden Montage- und Biegeträger, der an den beiden gegenüberliegenden Innenflächen des aus zwei miteinander verbundenen Halbschalen bestehenden Propellerflügels fixiert ist, sowie ein Verfahren zur Herstellung dieses Propellerflügels.

Bei derartigen Propellerflügeln kann es sich beispielsweise um Flügel eines Flugzeugpropellers, einer Schiffsschraube, einer Turbine oder eines Propellers einer Windkraftanlage handeln. Die bekannten Propellerflügel aus Kunststoffmaterial werden im sogenannten Handauflegeverfahren hergestellt, das heißt, mit Kunstharz getränkte Fasermatten werden schichtweise aufeinandergelegt. Darüber hinaus sind auch Verfahren mit Naßlaminaten oder vorimprägnierten Geweben oder unidirektionalen Faern bekannt, die auch maschinell abgelegt werden können. Dabei werden die beiden Halbschalen separat voneinander hergestellt, und in eine der Halbschalen werden der Montage- und Biegeträger sowie die beiden miteinander verbundenen Versteifungsgurte in derselben Herstellungstechnik eingeformt. Es ist auch möglich, in jeder Halbschale separat einen oder mehrere Versteifungsgurte zu bilden und anschließend miteinander zu verkleben. Dies ist vor allem bei sehr großen Propellern für Windkraftanlagen sehr aufwendig, langwierig und teuer. Darüber hinaus ist es sehr schwierig, beispielsweise dem stückweise eingeformten Montage- und Biegeträger die gewünschten Festigkeitseigenschaften zu verleihen.

Aus der US-A-4339230 ist ein Propellerflügel mit einem Montage- und Biegeträger zwischen zwei Propellerflügel-Halbschalen bekannt, der entweder aus längsgerichteten, kunstharzgetränkten Fasern oder aus sich kreuzenden Faserlagen aufgebaut ist, die jeweils um 45° zur Längsrichtung ausgerichtet sind.

Der Nachteil des bekannten Propellerflügels besteht darin, daß die den Aufbau bildenden Faserlagen jeweils einheitlich ausgebildet sind, obwohl im drehachsnahen Endbereich des Montage- und Biegeträgers vor allem eine große Torsions- und Biegebeanspruchung und am entgegengesetzten Endbereich im Innern des Flügels eine große Biege- und Schubbeanspruchung auftritt. Diesen Anforderungen trägt der bekannte Propellerflügel nicht Rechnung, und seine Faserlagen müssen daher in einer solchen Stärke aufgetragen werden, daß er überall den auftretenden Beanspruchungen standhält. Dies führt zum einem zu einem relativ hohen Gewicht und zum anderen zu hohen Kosten im Hinblick auf die erforderliche Faser- und Kunstharzmenge.

Das Herstellen eines Körpers aus gewickelten, kunstharzgetränkten Faserlagen ist auch aus der JP-A-05 269 868 bekannt, jedoch nicht in der Anwendung zur Herstellung von Montage- und Biegeträgern und für Propellerflügel, und zum anderen wird auch dort eine gleichmäßige Wicklung hergestellt, ohne auf die unterschiedlichen Belastungsanforderungen in den verschiedenen Bereichen zu achten.

Eine Aufgabe der vorliegenden Erfindung besteht darin, einen Propellerflügel der eingangs genannten Gattung aus Kunststoffmaterial so zu verbessern, daß er leichtgewichtiger und kostengünstiger hergestellt werden kann.

Diese Aufgabe wird erfindungsgemäß durch die Merkmale des Vorrichtungsanspruchs 1 und des Verfahrensanspruchs 11 gelöst.

Der erfindungsgemäße Propellerflügel hat den wesentlichen Vorteil, daß sein Montage- und Biegeträger durch einfaches Wickeln hinsichtlich der an den verschiedenen Stellen auftretenden unterschiedlichen Belastungen optimiert werden kann. Dies führt zu einer Material- und Gewichtseinsparung bzw. bei gleicher Materialmenge zu einer höheren Belastbarkeit. Dabei kann der Übergang vom drehachsnahen rohrförmigen Bereich in den drehachsfernen rechteckigen Bereich auf einfache Weise realisiert werden.

Durch die separate Herstellung des Montage- und Biegeträgers sowie der Versteifungsgurte können diese beispielsweise mit maschinellen Mitteln schnell und rationell hergestellt werden, wobei insbesondere der Montage- und Biegeträger als einteiliges Bauelement bezüglich seiner mechanischen Eigenschaften besser optimiert werden kann. Der Zusammenbau kann dann relativ schnell erfolgen, so daß der Propellerflügel schneller und insgesamt kostengünstiger hergestellt werden kann. Bei einem Defekt eines der Elemente kann dieses ohne Auswirkungen auf den Propellerflügel als Ganzes ausgesondert werden, so daß ein eventueller Ausschuß kostenmäßig wesentlich geringer in Erscheinung tritt. Als weitere Vorteile sind kürzere Taktzeiten durch geringere Werkzeugbelegung und eine verbesserte Qualitätskontrolle und -sicherung zu nennen.

Durch die in den Unteransprüchen aufgeführten Maßnahmen sind vorteilhafte Weiterbildungen und Verbesserungen des im Anspruch 1 angegebenen Propellerflügels möglich.

Die zweckmäßigerweise als vorgefertigte Elemente ausgebildeten Montage- und Biegeträger sowie Versteifungsgurte sind zweckmäßigerweise in den Halbschalen eingeklebt, wobei diese beiden Halbschalen selbst miteinander und damit mit den vorgefertigten Elementen verklebt sind. Hierdurch wird neben dem schnellen Zusammenbau auch eine gute Festigkeit erreicht.

Der Montage- und Biegeträger überlappt sich mit den Versteifungsgurten, um eine gute Kraftübertragung und eine gute Festigkeit zu erreichen. Dabei weisen die Überlappungsbereiche zur Erzielung von kontinuierlicher Kraftübertragung eine abnehmende Dicke auf und sind insbesondere keilförmig ausgebildet oder geschäftet. Der Montage- und Biegeträger ist dabei mit den Versteifungsgurten an den Überlappungsbereichen verklebt, insbesondere mit seiner Ober- und Unterseite.

Zwischen den Versteifungsgurten ist wenigstens ein vorgefertigtes Abstandselement (Querkraftsteg) vorgesehen, um den Abstand zwischen den beiden Halbschalen des Propellerflügels zu fixieren und insbesondere die Steifigkeit zu erhöhen. Auch das vorgefertigte Abstandselement trägt zur rationelleren Fertigung bei und ist vorzugsweise zwischen den Versteifungsgurten verklebt. Dabei können die Versteifungsgurte und das wenigstens eine Abstandselement zusammen auch ein vorgefertigtes Element bilden.

Der im Anspruch 1 angegebene Propellerflügel kann in vorteilhafter Weise durch ein Verfahren gemäß Anspruch 11 hergestellt werden, wobei die bereits geschilderten Vorteile auftreten.

Bei Verwendung eines Faserstrangs ist der Formwickelkörper zur Erleichterung des Wickelvorgangs vorzugsweise mit Wickelstiften versehen, wobei dann ein kunstharzgetränkter Faserstrang auf den Formwickelkörper und um die Wickelstifte gewickelt wird. Nach dem Wickeln werden gegebenenfalls die Wickelstifte und dann der Formwickelkörper entfernt.

Ein Ausführungsbeispiel der Erfindung ist in der Zeichnung dargestellt und in der nachfolgenden Beschreibung näher erläutert. Es zeigen:
- Fig. 1: die Draufsicht auf eine offene Halbschale eines Propellerflügels mit darin fixiertem Montage- und Biegeträger sowie Versteifungsgurten,
- Fig. 2: eine perspektivische Ansicht des Formwickelkörpers für den Montage- und Biegeträger beim Bewickeln,
- Fig. 3: eine perspektivische Darstellung des fertigen Montage- und Biegeträgers,
- Fig. 4: die vergrößerte perspektivische Darstellung des Verbindungsbereichs zwischen dem Montage- und Biegeträger und einem der Versteifungsgurte und
- Fig. 5: eine Querschnittsdarstellung durch den mittleren, die Versteifungsgurte enthaltenden Bereich des Propellerflügels.

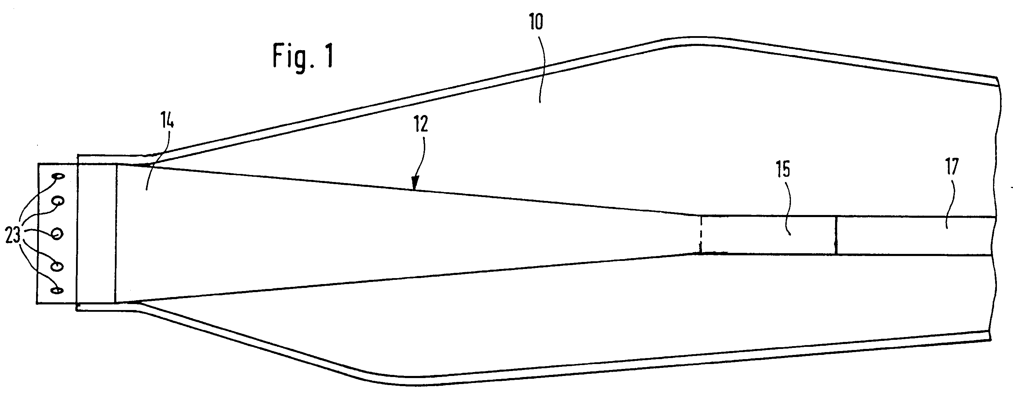

Die in Fig. 1 dargestellte Draufsicht zeigt einen Propellerflügel im halbfertigen Zustand während des Fertigungsprozesses, bei dem der im Betrieb von der Drehachse entfernte freie Endbereich zur Verkürzung der Zeichnung abgeschnitten ist. Derartige Propellerflügel werden für Flugzeugpropeller, Schiffsschrauben, Turbinenräder und Windkraftpropeller eingesetzt. Das dargestellte Ausführungsbeispiel bezieht sich auf den Propellerflügel eines Rotors für Windkraftmaschinen, wobei ein derartiger Propellerflügel beispielsweise 30 m lang sein kann.

Zur Herstellung dieses Propellerflügels werden zunächst zwei die Außenkontur des Propellerflügels bestimmende Halbschalen 10, 11 in entsprechenden Formen hergestellt. Hierzu können beispielsweise kunstharzgetränkte Fasermatten, wie Glasfasermatten oder Karbonfasermatten, schichtweise aufeinandergelegt werden (Handlaminarverfahren oder andere geeignete Ablegeverfahren). Insbesondere bei kleineren Propellerflügeln können die Halbschalen 10, 11 auch in einem Spritzverfahren hergestellt werden, wobei auch hier eine Faserverstärkung erfolgt. Es können auch unterschiedliche Fasermatten verwendet werden, beispielsweise können stärker beanspruchte Bereiche mit hochwertigeren Fasermatten und weniger beanspruchte Bereiche mit billigeren Fasermatten versehen werden. Als Fasern bieten sich z.B. Glas-, Kohle-, Aramid- und Polyamidfasern an.

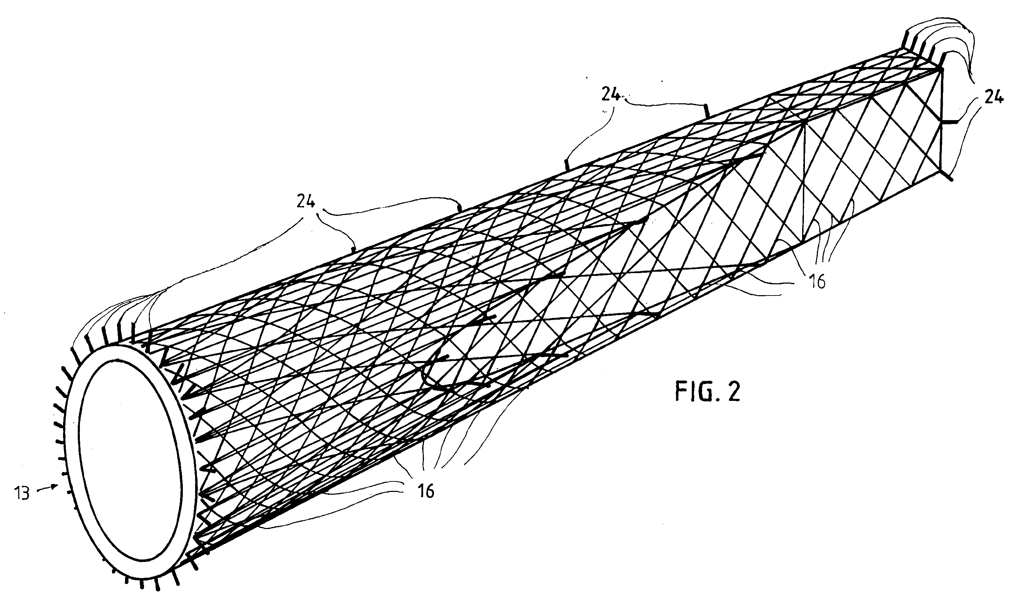

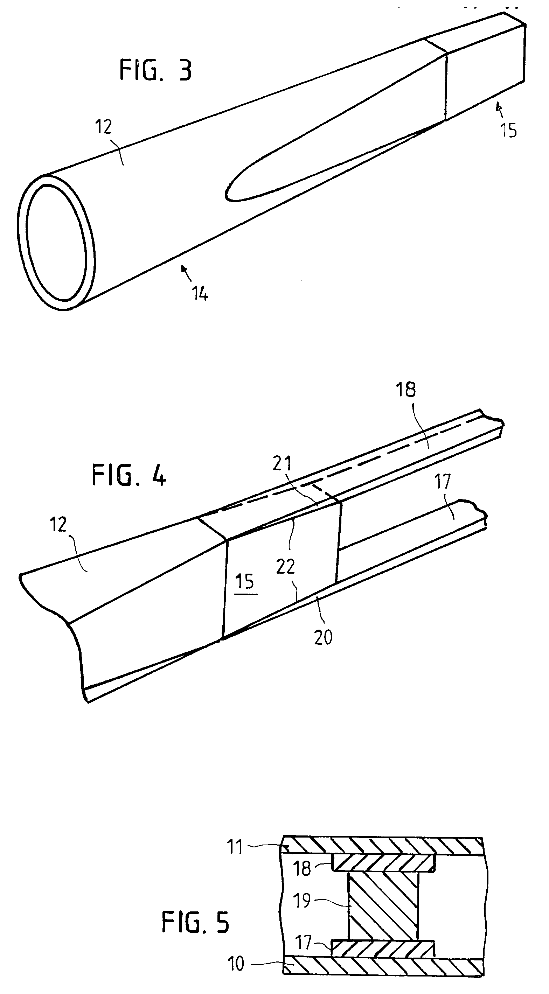

Separat zu diesen beiden Halbschalen 10, 11 wird ein Montage- und Biegeträger 12 hergestellt, wie er in Fig. 3 im fertigen Zustand dargestellt ist. Hierzu wird ein entsprechender Formwickelkörper 13 gemäß Fig. 2 mit Grenzen von Wickelstiften 24 versehen, beispielsweise mit kleinen Stahlstiften. Nun erfolgt das Bewickeln mit einem Faserstrang, der maschinell von einem nicht dargestellten Vorratswickelkörper abgewickelt wird. Dieser Faserstrang wird kunstharzgetränkt und dann auf den Formwickelkörper 13 mit Hilfe der Wickelstifte 24 aufgewickelt. Hierzu wird der Faserstrang mit einem nicht dargestellten Wickelarm bewegt, wobei auch der Formwickelkörper 13 beweglich eingespannt ist. Die Wicklung erfolgt so, daß der drehachsnahe Montagebereich 14 des Montage- und Biegeträgers 12, mit dessen Hilfe der fertige Propellerflügel an einer Drehachse montiert wird, für eine optimale Torsions- und Biegefestigkeit ausgelegt wird. Hierzu verlaufen die Fasern dort sowohl in Längsrichtung als auch schräg unter verschiedenen Winkeln bei sich überkreuzenden Fasern. Am anderen drehachsfernen Bereich 15, der später im Inneren des Propellerflügels angeordnet ist, erfolgt die Wicklung im wesentlichen im Hinblick auf eine gute Biege- und Schubfestigkeit. An der Ober- und Unterseite verlaufen die Fasern im wesentlichen in der Längsrichtung, da diese Bereiche - wie später noch genauer erläutert - mit Versteifungsgurten 17, 18 verbunden werden, deren Faserverlauf ebenfalls in Längsrichtung verläuft. An den beiden Seiten verlaufen die Fasern im wesentlichen gekreuzt unter einem Winkel von beispielsweise 45°. Im Zwischenbereich zwischen dem drehachsnahen Montagebereich 14 und dem drehachsfernen Bereich 15 gehen die Faserrichtungen allmählich ineinander über, um kontinuierliche Übergänge zwischen den verschiedenen Belastungszonen zu erreichen. Diese Übergänge können auch durch entsprechendes Umwickeln der Wickelstifte erreicht werden. Diese Faserbelegung kann auch durch unidirektionale Bänder oder Gewebe sowie Gewebe oder Gelege mit Fasern in Längs- und Querrichtung oder andere geeignete Faserrichtungen erfolgen. Das Bewickeln erfolgt so lange, bis die gewünschte Materialstärke zur Erzielung der erforderlichen Festigkeit erreicht ist. In Fig. 2 ist die aufgewickelte kunststoffgetränkte Faser 16 mit ihren verschiedenen Faserrichtungen in den einzelnen Bereichen durch entsprechende Linien dargestellt. Der Formwickelkörper 13 und damit auch der entstehende Montage- und Biegeträger 12 sind im drehachsnahen Montagebereich 14 rohrförmig mit kreisringförmigem Querschnitt ausgebildet und besitzt im drehachsfernen Bereich 15 einen rechteckigen Querschnitt, wobei der Übergang kontinuierlich erfolgt. Der rohrförmige Bereich kann unterschiedliche Querschnittsgestalt aufweisen, z.B. rund, oval, eckig od.dgl.

Nach dem Härten des Kunstharzes werden die Wickelstifte 24 und dann der Formwickelkörper 13 entfernt, so daß dann der Montage- und Biegekörper 12 gemäß Fig. 3 vorliegt. Der drehachsnahe Montagebereich 14 wird den Anforderungen entsprechend abgelängt. Anstelle von Wickelstiften 24 können auch andere Wickelhilfen treten.

Zwei langgestreckte, lattenförmige Versteifungsgurte 17, 18 werden separat aus faserverstärktem Kunststoffmaterial hergestellt. Die Fasern verlaufen hierbei im wesentlichen in der Längsrichtung. Weiterhin wird ein balkenförmiges Abstandselement 19 (Querkraftsteg) aus Kunststoffmaterial hergestellt, das den Abstand zwischen den beiden Versteifungsgurten 17, 18 festlegt. Anstelle eines Abstandselementes 19 können auch mehrere Abstandselemente nebeneinander angeordnet werden. Dieses Abstandselement 19 kann gemäß Fig. 5 aus einem leichteren Vollmaterial bestehen, oder es kann als Hohlkörper ausgebildet sein, oder es kann auch aus faserverstärktem Material mit lastgerechten Faserwinkeln oder aus einer Kombination dieser Möglichkeiten bestehen.

Zur Montage wird zunächst gemäß Fig. 1 ein Versteifungsgurt 17 innen an der Halbschale 10 in der Längsrichtung angeordnet und angeklebt. Dann wird der Montage- und Biegekörper 12 eingelegt und ebenfalls mit dem Versteifungsgurt 17 und der Halbschale 10 verklebt. Der Montage- und Biegekörper 12 ragt dabei mit seinem drehachsnahen Montagebereich 14 über die Halbschale 10 hinaus, was selbstverständlich nicht immer so sein muß. Der Überlappungsbereich zwischen dem Versteifungsgurt 17 und dem Montage- und Biegekörper 12 ist in Fig. 4 vergrößert und perspektivisch dargestellt. Die Versteifungsgurte 17, 18 weisen keilförmige Endbereiche 20, 21 auf, deren Winkel an entsprechende Anschrägungen 22 am drehachsfernen Bereich 15 des Montage- und Biegeträgers 12 angepaßt ist, so daß geschäftete stufenlose Übergänge entstehen und dadurch die Kraftübertragung ermöglicht wird.

Nun werden das Abstandselement 19 und der obere Versteifungsgurt 18 gemäß den Fig. 4 bzw. 5 eingeklebt. Zuletzt wird die vorgefertigte zweite Halbschale 11 darübergelegt, sowie am Versteifungsgurt 18 anliegt und mit diesen verklebt werden kann. Gleichzeitig werden die Außenkanten der Halbschalen 10, 11 miteinander verklebt. Nach dem Aushärten und notwendigen Nacharbeiten wird noch der drehachsnahe Montagebereich 14 des Montage- und Biegeträgers 12 mit den entsprechenden Montagebohrungen 23 versehen, die in Fig. 1 lediglich schematisch angedeutet sind.

Die Montagebohrungen 23 können natürlich auch bereits vorgegeben sein, so daß der Montage- und Biegeträger 12 mit Fixiervorrichtungen in der Halbschale 10 genau positioniert eingeklebt werden kann.

In Abwandlung der vorstehend beschriebenen Montage können die Versteifungsgurte 17, 18 zusammen mit dem Abstandselement 19 als vorgefertigte Einheit hergestellt, auch vorher mit dem Montage- und Biegeträger 12 verbunden und als Ganzes mit der Halbschale 10 bzw. der Halbschale 11 verklebt werden, oder die Versteifungsgurte 17, 18 werden zunächst mit den beiden Halbschalen 10, 11 separat verklebt und erst beim Verkleben der Halbschalen über das Abstandselement miteinander verbunden.

Die beschriebenen Klebeverbindungen können alternativ oder zusätzlich auch als Schraubverbindungen ausgebildet oder auf andere bekannte Weise miteinander verbunden werden. Die verbundenen Elemente können durch außen überlappende kunstharzgetränkte Mattenelemente noch verstärkt werden.

Gemäß einer weiteren Abwandlung des dargestellten und beschriebenen Ausführungsbeispiels können sich die Versteifungsgurte 17, 18 auch bis zum drehachsnahen Endbereich des Montage- und Biegeträgers 12 erstrecken, das heißt sie können diesen praktisch vollständig überlappen. Keilförmige Endbereiche und entsprechende Anschrägungen zur Bildung von geschäfteten stufenlosen Übergängen können dadurch entfallen. Solche Versteifungsgurte verbreitern sich entlang des Montage- und Biegeträgers zum drehachsseitigen Ende hin, so daß sie dort praktisch halbschalenartig diesen jeweils umgreifen, wobei die Dicke der Versteifungsgurte dabei auch kontinuierlich abnehmen kann. Derartig ausgebildete Versteifungsgurte, die überwiegend in Längsrichtung verlaufende, kunstharzgetränkte Fasern aufweisen können, entweder als vorgefertigte ausgehärtete Teile oder bei Verzicht auf separate Fertigung und Prüfung in Form von noch feuchten nicht ausgehärteten Bändern oder Fasertauen (sogenannten Roving-Strängen) in die Halbschalen eingelegt werden, wobei infolge des noch feuchten, unausgehärteten Zustandes, mindestens in einer Halbschale eine Anpassung und Verschiebung des Montage- und Biegeträgers automatisch erfolgt. Derartige vorgefertigte Fasertaue bestehen aus einer Vielzahl nebeneinander laufender harzgetränkter Stränge, sogenannter Rovings. Auf die noch im unausgehärteten Zustand in die Halbschalen eingelegten Versteifungsgurte können dann die Abstandselemente oder ein entsprechender Steg aufgesetzt bzw. aufgelegt werden, wobei infolge des noch unausgehärteten Zustands auch hier wiederum mindestens in einer Halbschale ein automatisches Verkleben erfolgt.

Die Versteifung des Montage- und Biegeträgers durch die praktisch vollständig diesen überlappenden Versteifungsgurte kann zur Veränderung der vorzusehenden Faserrichtungen des Montage- und Biegeträgers führen, das heißt, bei der Konzeption des Wickelvorganges dieses Montage- und Biegeträgers wird dann die Versteifung durch die Versteifungsgurte mit berücksichtigt.

## Patentansprüche

1. Propellerflügel aus Kunststoffmaterial, mit einem sich vom drehachsnahen Endbereich aus bis in den hohlen Propellerflügel hinein erstreckenden Montage- und Biegeträger, der an den beiden gegenüberliegenden Innenflächen des aus zwei miteinander verbundenen Halbschalen (10, 11) bestehenden Propellerflügels fixiert ist, und mit zwei an den gegenüberliegenden Innenflächen der beiden Halbschalen fixierten und sich als Verlängerung des Montage- und Biegeträgers im wesentlichen über die Länge des Propellerflügels erstreckenden Versteifungsgurten (17, 18), wobei der Montage- und Biegeträger (12) am drehachsnahen Montagebereich (14) im wesentlichen rohrförmig ausgebildet ist und zu den Versteifungsgurten (17, 18) hin in einen im wesentlichen rechteckigen Querschnitt übergeht, und wobei der Montage- und Biegeträger (12) aus gewickelten, kunstharzgetränkten Faserlagen besteht und die Faserrichtung im drehachsnahen Bereich (14) im Hinblick auf die Optimierung einer guten Torsions- und Biegefestigkeit im wesentlichen in der Längsrichtung und in sich kreuzenden Schrägrichtungen und im drehachsfernen Bereich (15) im Hinblick auf die Optimierung einer guten Biege- und Schubfestigkeit an der Ober- und Unterseite im wesentlichen in Längsrichtung und an den übrigen Seiten im wesentlichen unter einem Winkel von 45° zur Längsrichtung bei gekreuzter Wicklung verläuft.

2. Propellerflügel nach Anspruch 1, dadurch gekennzeichnet, daß der Montage- und Biegeträger (12) sowie die Versteifungsgurte (17, 18) als vorgefertigte Elemente in den Halbschalen (10, 11) des Propellerflügels fixiert sind.

3. Propellerflügel nach Anspruch 2, dadurch gekennzeichnet, daß die vorgefertigten Elemente in den Halbschalen (10, 11) eingeklebt sind.

4. Propellerflügel nach Anspruch 2 oder 3, dadurch gekennzeichnet, daß die beiden Halbschalen (10, 11) unter Bildung des Propellerflügels miteinander verklebt sind.

5. Propellerflügel nach einem der Ansprüche 2 bis 4, dadurch gekennzeichnet, daß sich der Montage- und Biegeträger (12) mit den Versteifungsgurten (17, 18) überlappt.

6. Propellerflügel nach Anspruch 5, dadurch gekennzeichnet, daß die Überlappungsbereiche (20 - 22) zur Erzielung von kontinuierlichen Anlageflächen an den Halbschalen (10, 11) eine verringerte Dicke aufweisen, insbesondere keilförmig ausgebildet oder geschäftet sind.

7. Propellerflügel nach Anspruch 5 oder 6, dadurch gekennzeichnet, daß der Montage- und Biegeträger (12) mit den Versteifungsgurten (17, 18) an den Überlappungsbereichen (20 - 22) verklebt ist, insbesondere mit seiner Ober- und Unterseite.

8. Propellerflügel nach einem der Ansprüche 2 bis 7, dadurch gekennzeichnet, daß zwischen den Versteifungsgurten (17, 18) wenigstens ein vorgefertigtes Abstandselement (19) vorgesehen ist.

9. Propellerflügel nach Anspruch 8, dadurch gekennzeichnet, daß das Abstandselement (19) zwischen den Versteifungsgurten (17, 18) verklebt ist.

10. Propellerflügel nach Anspruch 8 oder 9, dadurch gekennzeichnet, daß die Versteifungsgurte (17, 18) und das wenigstens eine Abstandselement (19) zusammen eine vorgefertigte Struktur bilden.

11. Verfahren zur Herstellung eines Propellerflügels aus Kunststoffmaterial nach einem der vorhergehenden Anspräche, dadurch gekennzeichnet, daß in der in einer Form vorgefertigten ersten Halbschale (10) des Propellerflügels die vorgefertigten Elemente, nämlich der Montage- und Biegeträger (12) und einer der beiden Versteifungsgurte (17) angeordnet werden, und daß dann die vorgefertigte zweite Halbschale (11) mit dem darin fixierten anderen Versteifungsgurt (18) an der ersten Halbschale (10) und dem Montage- und Biegeträger (12) mit dem dazwischen angeordneten Abstandselement fixiert werden, wobei zur Herstellung des Montage- und Biegeträgers (12) ein Formwickelkörper (13) mit einem kunstharzgetränkten Fasermaterial, das ein Faserstrang, ein unidirektionales Band oder Gewebe oder ein Gewebe oder Gelege mit Fasern verschiedener Richtungen sein kann, so bewickelt wird, daß die Fasern im drehachsnahen, im wesentlichen rohrförmig ausgebildeten Bereich (14) im wesentlichen in der Längsrichtung und in sich kreuzenden Schrägrichtungen verlaufen und im drehachsfernen, im wesentlichen einen rechteckigen Querschnitt aufweisenden Bereich (15) an der Ober- und Unterseite im wesentlichen in Längsrichtung und an den übrigen Seiten gekreuzt verlaufen.

12. Verfahren nach Anspruch 11, dadurch gekennzeichnet, daß das Fixieren jeweils durch Verkleben erfolgt.

13. Verfahren nach Anspruch 11 oder 12, dadurch gekennzeichnet, daß der Formwickelkörper (13) mit Wickelstiften (14) versehen wird, und daß dann der kunstharzgetränkte Faserstrang an den Formwickelkörper (13) und um die Wickelstifte (14) gewickelt wird.

14. Verfahren nach Anspruch 13, dadurch gekennzeichnet, daß nach dem Wickeln die Wickelstifte (14) und dann der Formwickelkörper (13) entfernt werden.

15. Verfahren nach einem der Ansprüche 11 bis 14, dadurch gekennzeichnet, daß die Fasern im drehachsfernen Bereich (15) an den übrigen Seiten im wesentlichen unter 45° zur Längsrichtung gekreuzt gewickelt werden.

## Claims

1. Propeller blade of synthetic material, with an assembly and bending support extending from the end zone nearest to the axis of rotation into the hollow propeller blade, and fixed to the two opposite inner faces of the propeller blade comprised of two half shells (10, 11) joined together, and with two stiffening flanges (17, 18) fixed to the opposite inner faces of the two half shells and extending as extensions of the assembly and bending support substantially over the length of the propeller blade, wherein the assembly and bending support (12) is substantially tubular in shape at the assembly area (14) nearest the axis of rotation, changing to a substantially rectangular cross-section towards the stiffening flanges (17, 18), and wherein the assembly and bending support (12) is made of wound, synthetic-resin-impregnated fibre layers, and the fibre direction runs, in the area (14) nearest to the axis of rotation with a view to optimising good torsional and flexural strength, substantially in the longitudinal direction and in intersecting diagonal directions, and in the area (15) furthest from the axis of rotation, with a view to optimising good flexural and shear strength, runs substantially in the longitudinal direction on the top and bottom sides, and substantially at an angle of 45° to the longitudinal direction, with crossed winding, on the other sides.

2. Propeller blade according to claim 1, characterized in that the assembly and bending support (12) and also the stiffening flanges (17, 18) are fixed as prefabricated elements in the half shells (10, 11) of the propeller blade.

3. Propeller blade according to claim 2, characterized in that the prefabricated elements are bonded into the half shells (10, 11).

4. Propeller blade according to claim 2 or 3, characterized in that the two half shells (10, 11) are bonded together to form the propeller blade.

5. Propeller blade according to any of claims 2 to 4, characterized in that the assembly and bending support (12) overlaps the stiffening flanges (17, 18).

6. Propeller blade according to claim 5, characterized in that, in order to provide continuous contact faces at the half shells (10, 11), the overlapping areas (20 -22) have a reduced thickness, in particular being wedge-shaped or shafted.

7. Propeller blade according to claim 5 or 6, characterized in that the assembly and bending support (12) is bonded to the stiffening flanges (17, 18) at the overlapping areas (20 - 22), in particular at its top and bottom sides.

8. Propeller blade according to any of claims 2 to 7, characterized in that one or more prefabricated spacer elements (19) is or are provided between the stiffening flanges (17, 18).

9. Propeller blade according to claim 8, characterized in that the spacer element (19) is bonded between the stiffening flanges (17, 18).

10. Propeller blade according to claim 8 or 9, characterized in that the stiffening flanges (17, 18) and the spacer element or elements (19) together form a prefabricated structure.

11. Method of producing a propeller blade of synthetic material according to any of the preceding claims, characterized in that the prefabricated elements, namely the assembly and bending support (12) and one of the two stiffening flanges (17) are mounted in the first half shell (10) prefabricated in a mould, and that then the prefabricated second half shell (11) with the other stiffening flange (18) located inside it, is fixed to the first half shell (10) and the assembly and bending support (12) with the spacer element located in between, wherein to create the assembly and bending support (12) a formed winding body (13) is so wound with a synthetic-resin-impregnated fibre material, which may be a fibre strand, a unidirectional ribbon or fabric, or a woven or knitted fabric with fibres in different directions, that the fibres in the substantially tubular area (14) close to the axis of rotation run substantially in the longitudinal direction and in intersecting diagonal directions, and in the area (15) with a substantially rectangular cross-section they run substantially in the longitudinal direction on the top and bottom sides, and are intersecting on the other sides.

12. Method according to claim 11, characterized in that in every case fixing is effected by bonding.

13. Method according to claim 11 or 12, characterized in that the formed winding body (13) is provided with winding pins (14), and tat the synthetic-resin-impregnated fibre strand is wound on the formed winding body (13) and around the winding pins (14).

14. Method according to claim 13, characterized in tat the winding pins (14) and then the formed winding body (13) are removed after winding.

15. Method according to any of claims 11 to 14, characterized in tat the fibres in the area (15) furthest from the axis of rotation are wound at the other sides so as to intersect substantially at 45° to the longitudinal direction.

## Revendications

1. Pale d'hélice en matière plastique, présentant une poutre de montage et de flexion s'étendant depuis une zone terminale proche de l'axe de rotation jusqu'à l'intérieur de la pale d'hélice creuse et qui est fixée sur les deux surfaces intérieures opposées de la pale d'hélice constituée de deux demicoques (10, 11) reliées entre elles, et présentant deux raidisseurs (17, 18) fixés aux surfaces intérieures opposées des deux demi-coques et s'étendant, en tant que prolongement de la poutre de montage et de flexion, sensiblement sur la longueur de la pale d'hélice, la poutre de montage et de flexion (12) étant réalisée en forme sensiblement tubulaire dans la zone de montage (14) proche de l'axe de rotation et se prolongeant, vers les raidisseurs (17, 18), avec une section sensiblement rectangulaire, et la poutre de montage et de flexion (12) étant constituée de couches de fibres enroulées et imprégnées de résine synthétique, et les fibres dans la zone (14) proche de l'axe de rotation s'étendant, dans le but d'optimiser une bonne résistance à la torsion et à la flexion, sensiblement dans la direction longitudinale et dans des directions obliques se croisant, et dans la zone (15) éloignée de l'axe de rotation, les fibres s'étendant, dans le but d'optimiser une bonne résistance à la flexion et au cisaillement, sur la face supérieure et la face inférieure, sensiblement dans la direction longitudinale et sur les autres faces, sensiblement sous un angle de 45° par rapport à la direction longitudinale, avec un enroulement croisé.

2. Pale d'hélice selon la revendication 1, caractérisée en ce que la poutre de montage et de flexion (12) ainsi que les raidisseurs (17, 18) sont fixés en tant qu'éléments préfabriqués dans les demi-coques (10, 11) de la pale d'hélice.

3. Pale d'hélice selon la revendication 2, caractérisée en ce que les éléments préfabriqués sont collés à l'intérieur des demi-coques (10, 11).

4. Pale d'hélice selon la revendication 2 ou 3, caractérisée en ce que les deux demi-coques (10, 11) sont collées entre elles et forment la pale d'hélice.

5. Pale d'hélice selon l'une des revendications 2 à 4, caractérisée en ce que la poutre de montage et de flexion (12) chevauche les raidisseurs (17, 18).

6. Pale d'hélice selon la revendication 5, caractérisée en ce que les zones de chevauchement (20 à 22) présentent une épaisseur réduite, en particulier elles sont en forme de coin ou présentent une enture, pour obtenir des surfaces de contact continues sur les demi-coques (10, 11).

7. Pale d'hélice selon la revendication 5 ou 6, caractérisée en ce que la poutre de montage et de flexion (12) est collée avec les raidisseurs (17, 18) sur les zones de chevauchement (20 à 22), notamment par sa face supérieure et sa face inférieure.

8. Pale d'hélice selon l'une des revendications 2 à 7, caractérisée en ce qu'au moins un élément d'écartement (19) préfabriqué est prévu entre les raidisseurs (17, 18).

9. Pale d'hélice selon la revendication 8, caractérisée en ce que l'élément d'écartement (19) est collé entre les raidisseurs (17, 18).

10. Pale d'hélice selon la revendication 8 ou 9, caractérisée en ce que les raidisseurs (17, 18) et le ou les élément(s) d'écartement (19) forment ensemble une structure préfabriquée.

11. Procédé de fabrication d'une pale d'hélice en matière plastique selon l'une des revendications précédentes, caractérisé en ce que dans la première demicoque (10), préfabriquée dans un moule, de la pale d'hélice, sont disposés les éléments préfabriqués, à savoir la poutre de montage et de flexion (12) et l'un des deux raidisseurs (17) et en ce qu'ensuite la deuxième demi-coque (11) préfabriquée est fixée, avec l'autre raidisseur (18) fixé à l'intérieur, à la première demi-coque (10) et à la poutre de montage et de flexion (12) avec l'élément d'écartement disposé entre elles, pour la réalisation de la poutre de montage et de flexion (12), une matière en fibres imprégnées de résine synthétique, qui peut être une corde de fibres, un ruban ou tissu unidirectionnel ou un tissu ou un assemblage de fibres de directions différentes, est enroulée sur un corps d'enroulement façonné (13), de manière que les fibres dans la zone (14) proche de l'axe de rotation, et de forme sensiblement tubulaire, s'étendent sensiblement dans la direction longitudinale et dans des directions obliques se croisant, et que dans la zone (15) éloignée de l'axe de rotation, présentant une section sensiblement rectangulaire, elles s'étendent sur la face supérieure et la face inférieure sensiblement dans la direction longitudinale et de manière qu'elles se croisent sur les autres faces.

12. Procédé selon la revendication 11, caractérisé en ce que la fixation s'effectue chaque fois par collage.

13. Procédé selon la revendication 11 ou 12, caractérisé en ce que le corps d'enroulement façonné (13) est pourvu de broches d'enroulement (14) et en ce qu'ensuite la corde de fibre imprégnée de résine synthétique est enroulée sur le corps d'enroulement façonné (13) et autour des broches d'enroulement (14).

14. Procédé selon la revendication 13, caractérisé en ce qu'après enroulement, les broches d'enroulement (14) et ensuite le corps d'enroulement façonné (13) sont enlevés.

15. Procédé selon l'une des revendications 11 à 14, caractérisé en ce que dans la zone (15) éloignée de l'axe de rotation, les fibres sont enroulées avec croisement sur les autres faces, sensiblement sous un angle de 45° par rapport à la direction longitudinale.
